# EUROPÄISCHE PATENTANMELDUNG

(11) **EP 4 678 138 A1**
(43) Veröffentlichungstag der Anmeldung: **14.01.2026**
(21) Anmeldenummer: 24187257.1
(22) Anmeldetag: 08.07.2024
(51) Int. Cl.: A61C 8/00

(54) **ABUTMENT FÜR EINEN ZAHNTECHNISCHEN AUFBAU**

(71) Anmelder: Steger, Heinrich, 39032 Sand in Taufers (IT)
(72) Erfinder: Steger, Heinrich, 39032 Sand in Taufers (IT)
(74) Vertreter: Schwarz & Partner Patentanwälte GmbH

(57) **Zusammenfassung**

Abutment (1) für zahntechnischen Aufbau, wobei das Abutment (1) mittels einer Fixierungsschraube (2) an einem Implantatkörper arretierbar ist, wobei das Abutment (1) eine Öffnung (9) mit einem Einführende (9a) und einem Austrittsende (9b) aufweist, wobei die Fixierungsschraube (2) über das Einführende (9a) der Öffnung (9) einführbar ist und wobei der Schraubabschnitt (21) der Fixierungsschraube (2) aus dem Austrittsende (9b) herausragt und wobei der Schraubabschnitt (21) mit einem Gewindeteil des Implantatkörpers zur Arretierung verschraubbar ist, dadurch gekennzeichnet, dass die Öffnung (8) des Abutment (1) eine Verjüngung (10) von Einführende (9a) Richtung Austrittsende (9b) aufweist, sodass ein Schraubenkopf (22) der Fixierungsschraube (2) im Bereich der Verjüngung (10) in Anlage bringbar ist, wobei das obere Ende (23) des Schraubenkopfs (22) im arretierten Zustand einen Abstand (d) zum Einführende (9a) aufweist, wobei das Abutment (1) zumindest einen Gewindeabschnitt (3) aufweist, wobei ein Arretierelement (4) ein dem Gewindeabschnitt (3) entsprechendes Gegengewinde (5) zur lösbaren Verbindung des Arretierelements (4) mit dem Abutment (1) aufweist, wobei das Arretierelement (4) über das Einführende (9a) in die Öffnung (9) einführbar ist und über das Gegengewinde (5) mit dem Gewindeabschnitt (3) lösbar verbindbar ist.

## Beschreibung

Die vorliegende Erfindung betrifft ein Abutment für einen zahntechnischen Aufbau, wobei das Abutment mittels einer Fixierungsschraube an einem Implantatkörper arretierbar ist, wobei das Abutment eine Öffnung mit einem Einführende und einem Austrittsende aufweist, wobei die Fixierungsschraube über das Einführende der Öffnung einführbar ist und wobei der Schraubabschnitt der Fixierungsschraube aus dem Austrittsende herausragt und wobei der Schraubabschnitt mit einem Gewindeteil des Implantatkörpers zur Arretierung verschraubbar ist. Weiters betrifft die Erfindung ein Implantatsystem, umfassend ein Abutment, eine Fixierungsschraube mit welcher das Abutment an einem Implantatkörper verbindbar ist, und gegebenenfalls ein Implantatkörper.

### HINTERGRUND DER ERFINDUNG

Implantatsysteme dienen im Allgemeinen dazu, Patienten mit Zahnersatz bzw. Dentalrestaurationen zu versorgen und somit verloren gegangene Zähne zu ersetzen. Dentalrestaurationen umfassen nach dem Stand der Technik ein Abutment, eine Fixierungsschraube sowie eine Suprakonstruktion. Bei der Versorgung von Patienten mit Dentalrestaurationen, wird im Mund meist eine formschlüssige Verbindung zwischen Implantat und Dentalrestauration hergestellt.

In EP 3 721 829 A1 wird ein Zahnimplantatsystem beschrieben, welches ein Gewinde in einem Abutment aufweist. Jedoch handelt es sich bei diesem Gewinde um ein Abutmentextraktor-Gewinde, welches auf Höhe des Schraubenkopfes angeordnet ist. Dieses Gewinde dient lediglich dazu, das Abutment ohne Beschädigung vom Implantat zu lösen.

Des Weiteren offenbart US 2013/0224689 A1 ein Implantat, umfassend Implantatkörper und Abutment, wobei einerseits der Implantatkörper über einen Klemmstift mit dem Abutment verbunden ist, während andererseits das Abutment ein Innengewinde aufweist, in welches sich eine Kontermutter mit Außengewinde einschrauben lässt, wodurch das Abutment mit dem Klemmstift verbindbar ist.

Beim Verbindungsprozess nach Stand der Technik kann es aufgrund von Krafteinwirkungen zu Lockerungen der Fixierungsschraube kommen, die eine feste Verbindung zwischen Abutment und Implantatkörper aufrechterhalten soll. Als Folge solcher Lockerungen ergeben sich Beschädigungen an den Restaurationen sowie dem daraus resultierenden kostenintensiven Ersatz der Restaurationen.

### KURZBESCHREIBUNG DER ERFINDUNG

Aufgabe der vorliegenden Erfindung ist die Bereitstellung eines Abutment für den zahntechnischen Aufbau, bei dem die oben genannten Nachteile vermindert sind.

Gelöst wird diese Aufgabe durch ein Abutment für einen zahntechnischen Aufbau, wobei das Abutment mittels einer Fixierungsschraube an einem Implantatkörper arretierbar ist, wobei das Abutment eine Öffnung mit einem Einführende und einem Austrittsende aufweist, wobei die Fixierungsschraube über das Einführende der Öffnung einführbar ist. Der Schraubabschnitt der Fixierungsschraube ragt bei vollständig eingeführer Fixierungsschraube aus dem Austrittsende heraus, so dass der Schraubabschnitt mit einem Gewindeteil des Implantatkörpers zur Arretierung verschraubbar ist. Die Öffnung des Abutment weist eine Verjüngung vom Einführende Richtung Austrittsende auf, sodass ein Schraubenkopf der Fixierungsschraube im Bereich der Verjüngung in Anlage bringbar ist, wobei das obere Ende des Schraubenkopfs im arretierten Zustand einen Abstand zum Einführende aufweist, wobei das Abutment zumindest einen Gewindeabschnitt aufweist, wobei ein Arretierelement ein dem Gewindeabschnitt entsprechendes Gegengewinde zur lösbaren Verbindung des Arretierelements mit dem Abutment aufweist, wobei das Arretierelement über das Einführende in die Öffnung einführbar ist und über das Gegengewinde mit dem Gewindeabschnitt lösbar verbindbar ist.

Ein Implantatsystem ist dazu geeignet, einen Patienten mit Zahnersatz zu versorgen, wobei das Implantatsystem einen Implantatköper umfasst. Der Implantatkörper, an dessen Außenumfang ein Schraubgewinde ausgebildet ist, wird in den Kieferknochen eingesetzt, wobei der Implantatkörper vorzugsweise zylinderförmig ausgebildet ist, um die Einfuhr in einem Kiefer zu erleichtern. Nach Implantierung wird in den Implantatkörper ein Abutment eingesetzt, welches mittels einer Fixierungsschraube mit dem Implantatkörper formschlüssig verbindbar ist, wobei die Fixierungsschraube in eine Sacklochbohrung im Implantatkörper geschraubt wird.

Das Abutment weist zur Fixierung mit der Fixierungsschraube eine Öffnung auf. Die Öffnung weist dazu ein Einführende und ein Austrittsende auf, wobei das Austrittsende jener Bereich ist, der der Sacklochbohrung des Implantatkörpers zugewandt ist. Die Fixierungsschraube ist über das Einführende der Öffnung einführbar und über einen Schraubabschnitt der Fixierungsschraube, der aus dem Austrittsende herausragt, kann die Fixierungsschraube mit einem Gewindeteil im Bereich der Sacklochbohrung des Implantatkörpers zur Arretierung verschraubt werden.

Die Öffnung des Abutment weist erfindungsgemäß eine Verjüngung auf, d.h. der Durchmesser der Öffnung verringert sich abschnittsweise, wobei die Verjüngung vom Einführende Richtung Austrittsende verläuft - d.h. der Durchmesser ist im Bereich des Eintrittsendes größer als im Bereich des Austrittsendes. Durch die Verjüngung kann der Schraubenkopf der Fixierungsschraube im Bereich der Verjüngung in Anlage gebracht werden und im arretierten Zustand wird das Abutment mit der Fixierungsschraube an den Implantatkörper verkeilt.

Das obere Ende des Schraubenkopfs weist im arretierten Zustand einen Abstand zum Einführende auf, sodass das Arretierelement in das Einführende - vorzugsweise vollständig - einführbar ist. Das Abutment weist zumindest einen Gewindeabschnitt auf, mit dem das Arretierelement mit einem dem Gewindeabschnitt entsprechenden Gegengewinde am Arretierelement lösbar verbindbar ist. Der Gewindeabschnitt ist dabei so angeordnet, dass er sich im Bereich zwischen dem oberen Ende des Schraubenkopfs im arretierten Zustand und dem Einführende befindet, d.h. im Bereich des Abstands angeordnet ist.

Im verbundenen Zustand ist das Arretierelement bevorzugt derart angeordnet, dass es am oberen Ende des Schraubenkopfs anliegt, sodass ein Lösen der Fixierungsschraube verhindert wird, da eine axiale Bewegung der Fixierungsschraube (z.B. durch Herausdrehen der Schraubverbindung am Implantatkörper) unterbunden wird. Daher kann vorgesehen sein, dass das Arretierelement im mit dem Abutment verbundenen Zustand am oberen Ende des Schraubenkopfs anliegt. Dadurch ist ein Lösen der Fixierungsschraube hemmbar.

Das Arretierelement kann außerdem einen Einbauabschnitt aufweisen mit welchem ein Aufbauteil - z.B. für einen Zahnersatz oder eine Dentalrestauration - verbindbar ist. Der Einbauabschnitt kann dazu formschlüssig mit dem Aufbauteil verbindbar sein. Ein solcher Aufbau mit Einbauabschnitt des Arretierelements ermöglicht eine Verjüngung des Schraubenkanals.

Das Arretierelement ist vorzugweise vollständig in die Öffnung einführbar. Dadurch wird die Aufbauhöhe auf ein Minimum gehalten.

Der Gewindeabschnitt innerhalb des Abutments kann links spiralisiert oder rechts spiralisiert ausgebildet sein, um ein vereinfachtes Einschrauben zu ermöglichen.

Außerdem kann die Verbindung zwischen Abutment und Arretierelement formschlüssig und lösbar sein. Dieser Formschluss stellt den korrekten Sitz von Abutment zu Arretierelement sicher.

Das Abutment und das Arretierelement können z.B. aus Titan, einer Titanlegierung, einer Zirkonkeramik oder einer Keramik geformt, wobei Abutment und Arretierelement nicht auf eines dieser Materialien beschränkt sind, jedoch vorzugsweise aus Titan oder einer Titanlegierung ausgeformt ist.

Das Arretierelement weist bevorzugt einen Innensechsrund auf, welcher ein verschleißärmeres Einschrauben des Arretierelements sowie die Übertragung eines hohen Drehmoments ermöglicht.

Zusätzlich zum Innensechsrund kann das Arretierelement einen Einbauabschnitt aufweisen, welcher eine formschlüssige Verbindung mit einem Aufbauteil ermöglicht. Weiters umfasst das Aufbauteil eine Implantatkrone, wobei das Aufbauteil nicht auf eine Implantatkrone beschränkt ist.

Die Erfindung betrifft weiters ein Implantatsystem, umfassend ein Abutment der vorgenannten Art mit dem Arretierelement und eine Fixierungsschraube mit welcher das Abutment an einem Implantatkörper vorzugsweise formschlüssig verbindbar ist. Das Implantatsystem kann weiters einen Implantatkörper umfassen.

### DETAILLIERTE BESCHREIBUNG DER ERFINDUNG

Weitere Details und Vorteile der Erfindung werden anhand der Figuren und Figurenbeschreibung erläutert.
- Fig. 1a, 1b: zeigen das Abutment für zahntechnischen Aufbau in einer Seitendarstellung (Fig. 1a) und in einer Schnittdarstellung (Fig. 1b)
- Fig. 2a, 2b: zeigen das Abutment für zahntechnischen Aufbau aus Fig. 1a in einer Explosionsdarstellung (Fig. 2a) samt einer Schnittdarstellung der Explosionsdarstellung (Fig. 2b)

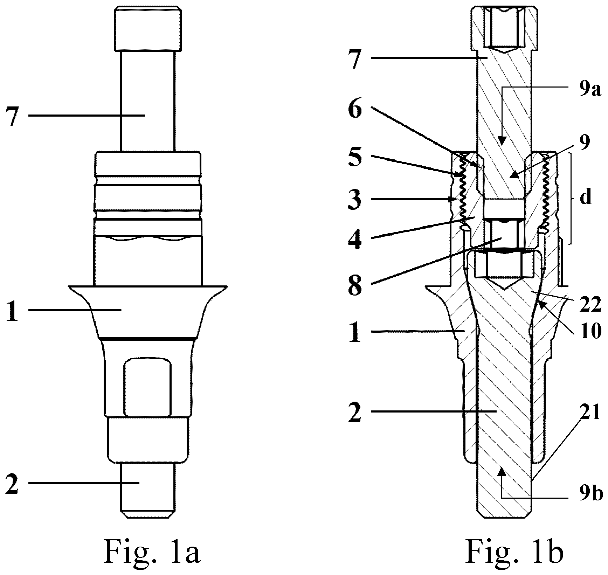

Die Ansichten der Fig. 1a, 1b zeigen das Abutment 1 für zahntechnischen Aufbau zum einen in einer Seitendarstellung und zum anderen in einer Schnittdarstellung. Mittels der Fixierungsschraube 2 ist das Abutment 1 an einem nicht gezeigten Implantatkörper arretierbar. Zur Fixierung weist das Abutment 1 eine Öffnung 9 mit einem Einführende 9a und einem Austrittsende 9b auf. Die Fixierungsschraube 2 wird über das Einführende 9a der Öffnung 9 eingeführt, sodass der Schraubabschnitt 21 der Fixierungsschraube 2 wieder aus dem Austrittsende 9b herausragt. Der Schraubabschnitt 21 wird mit einem Gewindeteil in einer Sacklochbohrung des Implantatkörpers zur Arretierung verschraubt.

Die Öffnung 9 des Abutment 1 ist vom Einführende 9a Richtung Austrittsende 9b verjüngt und weist demzufolge eine Verjüngung 10 auf. Im Bereich der Verjüngung 10 kann der Schraubenkopf 22 der Fixierungsschraube 2 in Anlage gebracht werden, sodass das Abutment am Implantatkörper verklemmt ist. Das obere Ende 23 des Schraubenkopfs 22 weist im arretierten Zustand einen Abstand d zum Einführende 8a auf. Dadurch kann das Arretierelement 4 in die Öffnung 9 - über das Einführende 9a - eingebracht werden.

Knapp oberhalb (z.B. ein paar zehntel Millimeter) des Schraubenkopfes 22 der Fixierungsschraube 2 weist das Abutment 1 einen ein- oder mehrteiligen Gewindeabschnitt 3 auf, der bevorzugt als Innengewinde ausgebildet ist. Der Gewindeabschnitt 3 ist einerseits am Ende des Abutments 1 angeordnet, wobei dieses Ende des Abutments 1 auf der dem Implantatkörper abgewandten Seite angeordnet ist. Andererseits ist der Gewindeabschnitt 3 in einem gewissen Abstand zum Schraubenkopf der Fixierungsschraube 2 angeordnet. Außerdem ist der Gewindeabschnitt 3 ein- oder mehrteilig und als Innengewinde ausgebildet. Der Gewindeabschnitt 3 kann zudem als links oder rechts spiralisiert ausgebildet sein.

Ein dem Gewindeabschnitt 3 entsprechend ausgebildetes Gegengewinde 5 - hier als Außengewinde ausgebildet - ist Teil des Schraubabschnittes des zylindrischen Arretierelements 4. Über dieses Gegengewinde 5 lässt sich in der Gewindeabschnitt 3 des Abutments 1 einschrauben. Dadurch ergibt sich zum einen eine stabile Verbindung zwischen dem Arretierelement 4 und dem Abutment 1. Zum anderen wird durch diese Verbindung ein Lösen der Fixierungsschraube 2 gehemmt. Das Arretierelement 4 weist ein dem Gewindeabschnitt 3 entsprechenden Schraubabschnitt 5 auf, welcher als Außengewinde ausgebildet ist. Durch den Schraubabschnitt 5 ist das Arretierelement 4 in den Gewindeabschnitt 3 einschraubbar. Der Schraubabschnitt 5 des Arretierelements 4 erstreckt sich nicht über die gesamte Höhe des Arretierelements 4.

Das Arretierelement 4 wird über das Einführende 9a in die Öffnung 9 eingeführt und liegt im verbundenen Zustand am oberen Ende 23 des Schraubenkopfs 22 an, wodurch ein Lösen der Fixierungsschraube 2 hemmbar ist.

Das Arretierelement 4 weist außerdem einen Einbauabschnitt 6 auf, welcher vorzugweise formschlüssig mit einem Aufbauteil 7 verbindbar ist.

Im eingeschraubten Zustand agiert das Arretierelement 4 wie eine Konterschraube, die ein mögliches Lösen der Fixierungsschraube 2 blockiert. Durch das Abutment 1 ist der Bewegungsspielraum der Fixierungsschraube 2 in zwei axiale Richtungen eingeschränkt und durch das Arretierelement 4 ist die Bewegung in eine dritte axiale Richtung eingeschränkt.

Des Weiteren weist das Arretierelement 4 einen Einbauabschnitt 6 auf, in den ein Aufbauteil 7 einbringbar ist und durch den eine Verjüngung des Schraubkanals ermöglicht wird.

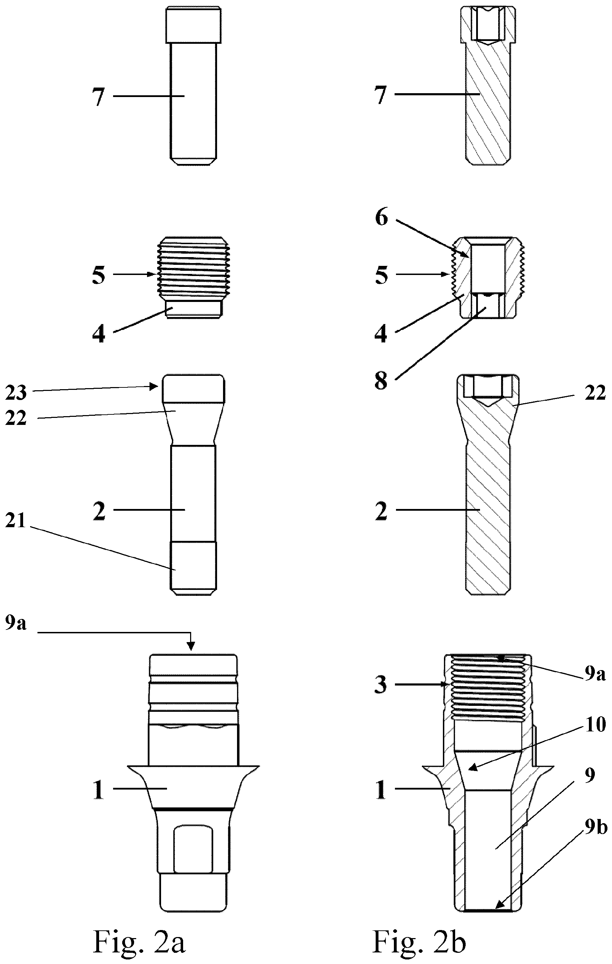

In den Figuren 2a, 2b sind perspektivische Ansichten in der Form einer Explosionsdarstellung des Abutments zum zahntechnischen Aufbau. Dadurch ist ersichtlich, dass das Arretierelement 4 einen Innensechsrund aufweist und vorzugsweise zylindrisch ausgeformt ist. Zudem weist auch die Fixierungsschraube 2 vorzugsweise einen Innensechsrund auf.

## Patentansprüche

1. Abutment (1) für zahntechnischen Aufbau,
wobei das Abutment (1) mittels einer Fixierungsschraube (2) an einem Implantatkörper arretierbar ist,
wobei das Abutment (1) eine Öffnung (9) mit einem Einführende (9a) und einem Austrittsende (9b) aufweist,
wobei die Fixierungsschraube (2) über das Einführende (9a) der Öffnung (9) einführbar ist und wobei der Schraubabschnitt (21) der Fixierungsschraube (2) aus dem Austrittsende (9b) herausragt und wobei der Schraubabschnitt (21) mit einem Gewindeteil des Implantatkörpers zur Arretierung verschraubbar ist,
**dadurch gekennzeichnet, dass** die Öffnung (8) des Abutment (1) eine Verjüngung (10) vom Einführende (9a) Richtung Austrittsende (9b) aufweist, sodass ein Schraubenkopf (22) der Fixierungsschraube (2) im Bereich der Verjüngung (10) in Anlage bringbar ist, wobei das obere Ende (23) des Schraubenkopfs (22) im arretierten Zustand einen Abstand (d) zum Einführende (9a) aufweist,
wobei das Abutment (1) zumindest einen Gewindeabschnitt (3) aufweist,
wobei ein Arretierelement (4) ein dem Gewindeabschnitt (3) entsprechendes Gegengewinde (5) zur lösbaren Verbindung des Arretierelements (4) mit dem Abutment (1) aufweist,
wobei das Arretierelement (4) über das Einführende (9a) in die Öffnung (9) einführbar ist und über das Gegengewinde (5) mit dem Gewindeabschnitt (3) lösbar verbindbar ist.

2. Abutment nach Anspruch 1, **dadurch gekennzeichnet, dass** das Arretierelement (4) einen Einbauabschnitt (6) zur Verbindung mit einem Aufbauteil (7) aufweist.

3. Abutment nach Anspruch 2, **dadurch gekennzeichnet, dass** der Einbauabschnitt (6) formschlüssig mit dem Aufbauteil (7) verbindbar ist.

4. Abutment nach einem der Ansprüche 1 bis 3, **dadurch gekennzeichnet, dass** das Arretierelement (4) im mit dem Abutment (1) verbundenen Zustand am oberen Ende (23) des Schraubenkopfs (22) anliegt.

5. Abutment nach einem der Ansprüche 1 bis 4, **dadurch gekennzeichnet, dass** der Gewindeabschnitt (3) als Innengewinde und Gegengewinde (5) als ein dem Gewindeabschnitt entsprechendes Außengewinde ausgebildet ist.

6. Abutment für zahntechnischen Aufbau nach einem der Ansprüche 1 bis 5, **dadurch gekennzeichnet, dass** der Gewindeabschnitt (3) links spiralisiert oder rechts spiralisiert ausgebildet ist.

7. Abutment nach einem der Ansprüche 1 bis 6, **dadurch gekennzeichnet, dass** das Arretierelement (4) formschlüssig mit dem Abutment (1) verbindbar ist.

8. Abutment nach einem der Ansprüche 1 bis 7, **dadurch gekennzeichnet, dass** das Arretierelement (4) einen Innensechsrund (8) aufweist.

9. Abutment nach einem der Ansprüche 1 bis 8, **dadurch gekennzeichnet, dass** der Einbauabschnitt (6) eine Ausnehmung umfasst, wobei der Durchmesser der Ausnehmung kleiner als der größte Durchmesser der Öffnung (9) ist.

10. Abutment nach Anspruch 9, **dadurch gekennzeichnet, dass** der Durchmesser der Ausnehmung kleiner als der geringste Durchmesser der Öffnung (9) ist.

11. Abutment nach einem der Ansprüche 2 bis 10, **dadurch gekennzeichnet, dass** das Aufbauteil (7) eine Implantatkrone umfasst.

12. Implantatsystem, umfassend
• ein Abutment (1) nach einem der Ansprüche 1 bis 11 und
• eine Fixierungsschraube (2) mit welcher das Abutment (1) an einem Implantatkörper vorzugsweise formschlüssig verbindbar ist.

13. Implantatsystem nach Anspruch 12, weiters umfassend einen Implantatkörper.
